# EUROPEAN PATENT APPLICATION

(11) **EP 2 071 451 A1**
(43) Date of publication of application: **17.06.2009**
(21) Application number: 07301644.6
(22) Date of filing: 07.12.2007
(51) Int. Cl.: G06F 9/44

(54) **Device and method for building compilable and executable applications from specifications expressed by classes**

(71) Applicant: Alcatel Lucent, 75008 Paris (FR)
(72) Inventor: Larvet, Philippe, 91470, Forges les Bains (FR)
(74) Representative: Korakis-Ménager, Sophie

(57) **Abstract**

A device (D) is intended for building compilable and executable applications (AP) from high-level representations of classes, each class storing data and/or implementing at least one public function and/or being able to activate at least one chosen public function of at least one other class. This device (D) comprises a generation means (GM) arranged i) for producing "new" class representations in a chosen programming language from formal representations of specification classes expressing a specification (AS) describing an application (AP) to be built, each class formal representation being written in a high-level symbolic language comprising a class declaration, a data declaration, a function declaration, and a restricted group of instruction types chosen among four basic types comprising respectively instructions for accessing a chosen stored data of a chosen class, instructions for computing a chosen data from a chosen operator and possibly from some given input parameter(s), instructions for testing if a chosen class data satisfies to a chosen condition, and instructions for generating an activation of a chosen public function of any class possibly with at least one chosen data parameter, and ii) for assembling these new class representations to build a compilable and executable application (AP) corresponding to the specification (AS).

## Description

The present invention relates to the building of compilable and executable applications from specifications expressed by classes and within the scope of object-oriented programming.

The term "class" means here an expression that is expressed by a class name and at least one definition (or representation) of stored data and/or at least one public function described by at least one instruction.

Moreover the expression "application specification" means here at least one sentence which defines at least one requirement that the desired application should fulfill. More precisely, the application requirements describe what the application will do, and what its functional and non-functional features are. These requirements are preferably expressed in natural language, but they may be expressed under the form of any formal or non-formal textual representation.

Many authors have described methods to write (software) applications but these methods are either fully manual or depending on software development environments such as Java SDK, Eclipse, Visual Studio, for instance. So, these methods do not allow to build automatically executable applications from their specifications.

The object of this invention is to overcome the above mentioned drawback, and more precisely to allow a building of executable applications from specifications expressed by high-level representations of classes (each of them storing data and/or implementing at least one public function and/or being able to activate at least one chosen public function of at least one other class).

For this purpose, the invention provides a method for building compilable and executable applications from classes and consisting:
- of expressing a specification describing an application to be built in terms of formal representations of classes written in a high-level symbolic language comprising a class declaration, a data declaration, a function declaration, and a restricted group of instruction types chosen among four basic types comprising respectively: instructions for accessing (A) a chosen stored data of a chosen class, instructions for computing (C) a chosen data from a chosen operator and possibly from some given input parameter(s), instructions for testing (T) if a chosen class data satisfies to a chosen condition, and instructions for generating an activation (G) of a chosen public function of any class possibly with at least one chosen data parameter, then
- of producing "new" class representations in a chosen programming language from these high-level formal representations of the specification classes, and
- of assembling these new class representations to build a compilable and executable application corresponding to the specification.

The method according to the invention may include additional characteristics considered separately or combined, and notably:
- each public function of a class may be described by a sequence of at least one instruction having a type chosen in the restricted group of four basic instruction types A, C, T and G;
- the restricted group of instruction types may contain the four basic types of instruction A, C, T and G;
- in a variant the restricted group of instruction types may contain less than the four basic types of instruction A, C, T and G;
- each time one receives a specification describing an application to be built, one may perform an automatic analysis of this specification to determine the classes expressing it, then one may determine automatically the formal representations of these determined specification classes;
- one may store at least some of the class formal representations from which said new class representations are produced, and one may access these stored class formal representations to determine the formal representations of the classes that are expressing the received specification.

The invention also provides a device for building compilable and executable applications from high-level representations of classes and comprising a generation means arranged:
- for producing "new" class representations in a chosen programming language from formal representations of specification classes expressing a specification describing an application to be built, each class formal representation being written in a high-level symbolic language comprising a class declaration, a data declaration, a function declaration, and a restricted group of instruction types chosen among four basic types comprising respectively instructions for accessing (A) a chosen stored data of a chosen class, instructions for computing (C) a chosen data from a chosen operator and possibly from some given input parameter(s), instructions for testing (T) if a chosen class data satisfies to a chosen condition, and instructions for generating an activation (G) of a chosen public function of any class possibly with at least one chosen data parameter, and
- for assembling these new class representations to build a compilable and executable application corresponding to the specification.

The device according to the invention may include additional characteristics considered separately or combined, and notably:
- each public function of a class may be described by a sequence of at least one instruction having a type chosen in the restricted group of four basic instruction types A, C, T and G;
- it may comprise an analysis means arranged, each time is received a specification describing an application to be built, for analysing this specification to determine the classes expressing it;
- it may comprise a storing means for storing at least some of the class formal representations from which the new class representations are produced;
   ➢ the analysis means may be arranged for accessing the storing means in order to extract the stored formal representations of the classes that are expressing the received specification.

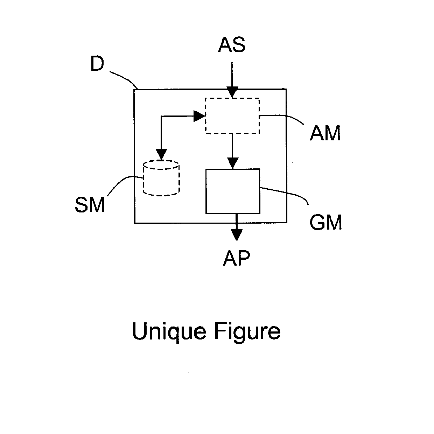

Other features and advantages of the invention will become apparent on examining the detailed specifications hereafter and the appended drawing, wherein the unique figure schematically illustrates an example of embodiment of a device according to the invention.

The appended drawing may serve not only to complete the invention, but also to contribute to its definition, if need be.

The invention aims at offering a device, and the associated method, intended for building executable applications from the text of their specifications expressed by classes.

The invention addresses any type of application described by a textual written specification expressing the requirements of the application in terms of formal representations of classes.

Let us remind that the term "class" means here an expression that is defined (or expressed) by one class name, and at least one definition (or representation) of a stored data and/or at least one public function described by a sequence of at least one instruction.

As schematically illustrated in the unique figure, a device D according to the invention comprises at least a generation module (or code generator) GM.

This generation module (or code generator) GM intervenes each time an executable application AP has to be built from a specification AS.

Let us remind that the expression "application specification" means here at least one sentence which defines at least one requirement that the desired application should fulfill. More precisely, the application requirements describe what the application AP will do, and what its functional and non-functional features are. These requirements are preferably expressed in natural language, but they may be expressed under the form of any formal or non-formal textual representation.

According to the invention, every application specification AS is expressed in terms of formal representations of classes Ci that are written in a high-level symbolic language comprising chosen types of statement.

These chosen statement types comprise three types of declaration and a restricted group of instruction types.

The three types of declaration are the class declaration, the data declaration and the function declaration.

The instruction types of each restricted group are chosen among four basic types comprising respectively:
- instructions for accessing a chosen stored data of a chosen class. This type may be referenced A (for "Access") because it comprises instructions consisting in an access function,
- instructions for computing a chosen data from a chosen operator and possibly from some given input parameter(s). This type may be referenced C (for "Calculate" (or "Compute")) because it comprises instructions consisting in a calculation function,
- instructions for testing if a chosen class data satisfies to a chosen condition. This type may be referenced T (for "Test") because it comprises instructions consisting in a test function, and
- instructions for generating an activation of a chosen public function (or method) of any class possibly with at least one chosen data parameter (or in other words for generating events for any class). This type may be referenced G (for "Generate") because it comprises instructions consisting in an event generation, this event being translated, within the object-oriented world, into a function call with parameters.

For instance, if a class Ci is designated by its name ("class_name") and a class data is designated by its name ("data_name"), then:
- an access function can be written A(class_name, data_name), or A(class_name.data_name) if a dotted notation is used,
- a calculation function can be written C(result, operand1, operator, operand2), where operand1 and operand2 are class data or results of function calls,
- a test function can be written T(condition, action_if_true, action_if_false), where "action_if_true" designates an action to be carried out if the associated condition is true (or satisfied), "action_if_false" designates an action to be carried out if the associated condition is false (or not satisfied), and "condition" expresses a logical condition on class data or results of function calls, and
- a generation function can be written G(class_name, function_name, parameter) or G(class_name.function_name(parameters)) if the dotted notation is used, where "function_name" designates a public function (or method) of the class "class_name".

The classes Ci may belong to at least three different categories. A first category comprises classes that store at least one data. A second category comprises classes that are defined by a sequence of at least one specific instruction. A third category comprises classes that store at least one data and are defined by a sequence of at least one specific instruction.

According to the invention a "specific instruction" is an instruction expressed as a predicate and having one of the four above mentioned basic instruction types (A, C, T, G).

The classes Ci that express (or compose) an application specification AS can be determined from the text of this application specification AS by a device user. In this case, the user builds a formal representation of each determined class Ci from the three above mentioned declaration types (class, data, function) and depicts each function of each class by using instructions that belong to a restricted group of instruction types chosen among the four above mentioned basic instruction types. For instance, the device D may propose to the user to select at least one instruction type among the four basic ones (A, C, T, G).

In a variant, the device D may comprise a storing means SM intended for storing formal representations of a set of classes Ci (i = 1 to N). In this case, the user can determine (or select), into the storing means SM, the formal representations of the classes Ci that compose (or express) the application specification AS, according to him.

Any type of storing means SM, capable of storing formal representations of classes Ci and known from the man skilled in the art, may be used, and notably databases, flash memories, CDs, USB keys, ROMs or RAMs, flat files systems and any other kind of repository.

In another variant, the device D may comprise an analysis module AM intended, each time an application specification AS is received, for analysing the text of this application specification AS in order to determine the classes Ci composing (or expressing) it. Once the analysis module AM has determined the classes Ci composing an application specification AS, the user builds a formal representation of each determined class Ci from the three above mentioned declaration types (class, data, function) and depicts each function of each class by using instructions that belong to a restricted group of instruction types chosen among the four above mentioned basic instruction types. For instance, the device D may propose to the user to select at least one instruction type among the four ones (A, C, T, G).

In still another variant, the device D may comprise the above mentioned storing means SM and an analysis module AM which is not only intended for analysing the text of a received application specification AS in order to determine classes Ci composing it, but also for accessing the storing means SM in order to extract the formal representations of these determined classes Ci. In this variant the analysis module AM may be divided in two sub-modules, a first one for performing the text analysis and a second one for extracting from the storing means SM the formal representation(s) of the class(es) determined by the first sub-module in the specification text. Moreover, in this variant the analysis module AM can be coupled to external ontology(ies) or external dictionary(ies) or thesaurus in order to more easily extract classes by means of a semantic analysis.

Once the formal representations of the classes Ci composing an application specification AS have been defined by a user or extracted from the storing means SM by the analysis module AM, the generation module GM is arranged for producing "new" class representations, i.e. classes in source code, in a chosen programming language from these formal representations, and then for assembling these source code classes in order to build the desired compilable and executable application AP which corresponds to the received application specification AS.

For instance, the chosen programming language could be Java, C++ or C#.

The programming process according to the invention can be called "reduced instruction set programming" (RISP) and can be compared with the conception of biological proteins. Let us remind that a protein is made of a chosen number of given peptides defining together a polypeptide, each of them being made of a chosen ordered sequence of four amino-acids (Adenine (A), Guanine (G), Cytosine (C) and Thymine (T)). For instance, a polypeptide (or protein) can be partly defined by the following sequence (ACTG-AACG-ACCG-ACTG-...). Moreover, proteins communicate therebetween through molecule or ionic exchanges. So, in an analogy with the protein domain, the classes Ci according to the invention correspond to the peptides, the class data correspond to the molecules, and the generated events correspond to the exchange of molecules (when a function is called with parameters) or to a ionic exchange (when a function is called without parameter). Therefore, an executable application AP (produced by the generation module GM) is a kind of ordered sequence of groups of X specific instructions whose types are chosen into the chosen restricted group of M basic instruction types. M is an integer number which is at least equal to one (1). For instance, M = 4 (as it is the case in biological peptides).

So, an application is a set of instructions that are taken as inputs by the generation module (or code generator GM) to build a complete and compilable application AP.

A simple, partial and non limiting example will be now described to illustrate the programming process that is performed by the device D according to the invention.

This non limiting example is relative to the use of an automated teller machine (or ATM). Let us remind that an automated teller machine (ATM) can be defined as a computerized telecommunications device that provides customers of a financial institution (such as a bank) with access to financial transactions in a public space without the need for a human clerk or bank teller. On most modern ATMs, the customer is identified by inserting a plastic card with a magnetic stripe or a plastic smartcard with a chip, that contains a unique card number and some security information, such as an expiration date. Security is provided by the customer entering a personal identification number (PIN). When using an ATM, a customer can access his bank account in order to make cash withdrawals (or credit card cash advances) and check his account balance.

It is assumed hereafter that the application specification AS aims at allowing a customer to make a withdrawal. Such an application specification AS can be defined by the following sentences, for instance:
- the customer introduces his card in the ATM,
- the ATM asks the customer to enter his secret code (PI N code),
- the customer enters his code,
- the ATM (card reader) checks the code,
- if the code is bad, after three tries, the card is returned to the user,
- if the code is good, the ATM asks the customer to enter the amount of his withdrawal,
- the customer enters the amount he wants,
- the ATM checks onto the card if the withdrawal amount is authorized,
- the ATM, via a bank interface, asks the customer's account if the bank balance allows the withdrawal,
- if the above conditions are OK, the banknotes can be distributed through the distribution slot.

The analysis of this simple specification text allows to determine the following classes Ci: card, card reader, bank interface, ATM, slot. The exchanges of events between these classes Ci allow to implement the application AP. An example of formal representations in "ACTG notation" of the determined classes Ci can be as follows

```
 card {
    data:
        secret_code=1234;
 }
 card_reader {
    data:
        code_input;
    functions:
        introduce_card() {
          G(dialogue, "Your card is being read");
          G(card reader, check_code);
        }
        check_code() {
          G(dialogue, "Please enter your PIN code");
          C(code_input, input());
         T(code_input==A(card, secret_code), G(ATM,
         ask amount), code_KO);
       }
       code_KO() {
          G(dialogue, "Bad code");
          G(card reader, check_code);
       }
       return_card() {
         G(dialogue, "Please take your card to get your
         money");
          G(slot, distribute, A(ATM, withdrawal_amount) );
       }
 }
 slot {
   data:
       nb_of_banknotes;
   functions:
       distribute(parameter) {
         C(nb_of_banknotes=parameter/A(banknote, value) );
        G(dialogue,"Here is your money (nb of banknotes =
         "+nb_of_banknotes+")");
        }
 }
```

From the ACTG notation, the code generator GM can automatically produce the following new class in Java for the class "card reader":

```
 class card_reader {
    //data:
        int code_input;
    // instances (generated)
        dialogue thedialogue;
        card thecard;
       ATM theATM;
        slot theslot;
    //constructor (generated)
        public card_reader() {
          thedialogue = new dialogue();
          thecard = new card();
          theATM = new ATM();
          theslot = new slot();
        }
    //methods:
        public void introduce_card() {
          thedialogue.display("Your card is being read");
         this.check_code();
       }
       public void check_code() {
         thedialogue.display("Please enter your PIN
         code");
         code_input = input();
         if(code_input==thecard.secret_code)
         theATM.ask_amount();
          else this.code_KO();
       }
       public void code_KO() {
          thedialogue.display("Bad code");
          this.check_code();
       }
       public void return_card() {
          thedialogue.display("Please take your card to
          get your money");
          theslot.distribute(theATM.withdrawal_amount);
       }
 }
```

In practice, the code generator GM produces automatically new Java classes for all the classes Ci expressing the specification AS (here, these classes are: card, card reader, bank interface, ATM, slot).

The device D, and more precisely its generation module GM and possibly its storing means SM and/or analysis module AM, are preferably software modules. But they may be also respectively made of electronic circuit(s) or hardware modules, or a combination of hardware and software modules.

The invention can also be considered in terms of a method for building executable applications AP from classes Ci composing a specification AS.

Such a method may be implemented by means of a device D such as the one above described with reference to the unique figure. Therefore, only its main characteristics will be mentioned hereafter.

The method according to the invention consists:
- of expressing a specification AS describing an application AP to be built in terms of formal representations of classes Ci written in a high-level symbolic language comprising three declaration types: a class declaration, a data declaration, a function declaration, and a restricted group of instruction types chosen among four basic types comprising respectively instructions for accessing (A) a chosen stored data of a chosen class, instructions for computing (C) a chosen data from a chosen operator and possibly from some given input parameter(s), instructions for testing (T) if a chosen class data satisfies to a chosen condition, and instructions for generating an activation (G) of a chosen public function of any class possibly with at least one chosen data parameter, then
- of producing "new" class representations in a chosen programming language from these formal representations of the specification classes Ci, and
- of assembling these new class representations to build a compilable and executable application AP corresponding to this specification AS.

When the analysis of the text of specification AS is performed automatically (by the analysis module AM), and when the formal representations of the specification classes are extracted automatically from the storing means SM (by the analysis module AM), the invention can be considered as a mean for producing a compilable and executable application AP directly from the text of its specification AS.

The invention offers a new approach which strongly differs from the biological approaches known from the art, such as genetic algorithms, neural networks and populationist ant-programming.

It is reminded that genetic algorithms (or evolutionary algorithms) belong to the family of meta-heuristic algorithms, whose aim is to get a close solution, in an acceptable time, to an optimization problem, when no exact method is known to solve the problem in a reasonable time. By using the concepts of gene and mutation, the genetic algorithms use the notion of natural selection and evolution developed during the XIX century by Ch.Darwin and apply these notions to a population of potential solutions to the given problem. So, one gets closer to an acceptable solution by successive "jumps".

The present invention does not use the concept of gene, nor mutation, nor natural selection, nor else evolution, and its aim is not to optimize but to ease production of executable applications within the scope of object-oriented programming.

An artificial neural network is a computation model whose design is very schematically inspired from the functioning of true neurons (human or not). The neural networks are generally optimized by statistic-type learning methods, so they belong firstly to the family of statistical applications, which they enrich with a set of paradigms allowing to generate wide functional spaces, flexible and partially structured, and secondly to the family of artificial intelligence methods, which they enrich by allowing to take decisions that lean more on the perception than on the formal logical reasoning.

The present invention does not use the concept of neuron nor statistic, is not an artificial intelligence method, and its aim is not to fire a decision but to ease the production of executable programs within the scope of object-oriented programming.

The populationist ant-programming is a heuristic method for combinatorial optimization problems inspired by the foraging behavior of ants. It allows a deeper insight into the general principles underlying the use of an iterated Monte Carlo approach for the multi-stage solution of a combinatorial optimization problem. Such an insight is intended to provide the designer of algorithms with new categories, an expressive terminology, and tools for dealing effectively with the peculiarities of the problem at hand. It searches for the optimal policy of a multi-stage decision problem to which the original combinatorial problem is reduced.

The present invention does not use the concept of ant, nor colony, nor else optimization, and its aim is not an heuristic for combinatorial optimization problems, but to ease the production of executable applications within the scope of object-oriented programming.

The invention is not limited to the embodiments of method and device described above, only as examples, but it encompasses all alternative embodiments which may be considered by one skilled in the art within the scope of the claims hereafter.

## Claims

1. Method for building compilable and executable applications (AP) from high-level representations of classes (Ci), each class storing data and/or implementing at least one public function and/or being able to activate at least one chosen public function of at least one other class, **characterized in that** said method consists i) of expressing a specification (AS) describing an application (AP) to be built in terms of formal representations of classes (Ci) written in a high-level symbolic language comprising a class declaration, a data declaration, a function declaration, and a restricted group of instruction types chosen among four basic types comprising respectively instructions for accessing a chosen stored data of a chosen class, instructions for computing a chosen data from a chosen operator and possibly from some given input parameter(s), instructions for testing if a chosen data satisfies to a chosen condition, and instructions for generating an activation of a chosen public function of any class possibly with at least one chosen data parameter, then ii) of producing "new" class representations in a chosen programming language from said formal representations of the specification classes (Ci), and iii) of assembling said new class representations to build a compilable and executable application (AP) corresponding to said specification (AS).

2. Method according to claim 1, **characterized in that** each public function of a class is described by a sequence of at least one instruction having a type chosen in said restricted group of four basic instruction types.

3. Method according to one of claims 1 and 2, **characterized in that** said restricted group of instruction types contains said four basic types of instruction.

4. Method according to one of claims 1 and 2, **characterized in that** said restricted group of instruction types contains less than said four basic types of instruction.

5. Method according to one of claims 1 to 4, **characterized in that**, each time one receives a specification (AS) describing an application (AP) to be built, i) one performs an automatic analysis of said specification (AS) to determine said classes expressing it, then ii) one determines automatically said formal representations of these determined specification classes (Ci).

6. Method according to one of claims 1 to 5, **characterized in that** one stores at least some of said class formal representations from which said new class representations are produced, and one accesses these stored class formal representations to determine the formal representations of the classes that are expressing said received specification (AS).

7. Device (D) for building compilable and executable applications (AP) from high-level representations of classes (Ci), each class storing data and/or implementing at least one public function and/or being able to activate at least one chosen public function of at least one other class, **characterized in that** said device comprises a generation means (GM) arranged i) for producing "new" class representations in a chosen programming language from formal representations of specification classes (Ci) expressing a specification (AS) describing an application (AP) to be built, each class formal representation being written in a high-level symbolic language comprising a class declaration, a data declaration, a function declaration, and a restricted group of instruction types chosen among four basic types comprising respectively instructions for accessing a chosen stored data of a chosen class, instructions for computing a chosen data from a chosen operator and possibly from some given input parameter(s), instructions for testing if a chosen class data satisfies to a chosen condition, and instructions for generating an activation of a chosen public function of any class possibly with at least one chosen data parameter, and ii) for assembling said new class representations to build a compilable and executable application (AP) corresponding to said specification (AS).

8. Device according to claim 7, **characterized in that** each public function of a class is described by a sequence of at least one instruction having a type chosen in said restricted group of four basic instruction types.

9. Device according to one of claims 7 and 8, **characterized in that** said restricted group of instruction types contains said four basic types of instruction.

10. Device according to one of claims 7 and 8, **characterized in that** said restricted group of instruction types contains less than said four basic types of instruction.

11. Device according to one of claims 7 to 10, **characterized in that** it comprises an analysis means (AM) arranged, each time it receives a specification (AS) describing an application to be built, for analysing said specification (AS) to determine classes expressing it.

12. Device according to one of claims 7 to 11, **characterized in that** it comprises a storing means (SM) for storing at least some of said class formal representations from which said new class representations are produced.

13. Device according to the combination of claims 11 and 12, **characterized in that** said analysis means (AM) is arranged for accessing said storing means (SM) in order to extract the stored formal representations of the classes that are expressing said received specification (AS).
